Europäisches Patentamt

European Patent Office

Office européen des brevets

(11) Veröffentlichungsnummer: **0 584 861 A1**

## (12) EUROPÄISCHE PATENTANMELDUNG

(21) Anmeldenummer: **93202372.4**

(51) Int. Cl.5: **H04B 3/21**

(22) Anmeldetag: **13.08.93**

(30) Priorität: **18.08.92 DE 4227327**

(43) Veröffentlichungstag der Anmeldung:
**02.03.94 Patentblatt 94/09**

(84) Benannte Vertragsstaaten:
**DE FR GB**

(71) Anmelder: **Philips Patentverwaltung GmbH**
**Wendenstrasse 35c**
**D-20097 Hamburg(DE)**

(84) **DE**

(71) Anmelder: **PHILIPS ELECTRONICS N.V.**
**Groenewoudseweg 1**
**NL-5621 BA Eindhoven(NL)**

(84) **FR GB**

(72) Erfinder: **Kellermann, Walter**
**c/o Philips Patentverwalt. GmbH,**
**Wendenstrasse 35c**
**D-20097 Hamburg(DE)**

(74) Vertreter: **Volmer, Georg, Dipl.-Ing. et al**
**Philips Patentverwaltung GmbH,**
**Wendenstrasse 35c**
**D-20097 Hamburg (DE)**

(54) **Übertragungssystem mit einem Teilbandechokompensator mit Teilbandcodiereinrichtung.**

(57) Die Erfindung betrifft ein Übertragungssystem mit einen Teilbandechokompensator (5, 6) mit einem zwischen eine Empfangs- (r) und eine Sendestrecke (s) einschaltbaren Kompensator (5).

Zur Verringerung des Rechenaufwands sowie der Signallaufzeiten auch bei Teilbandcodierung bzw. Teilbanddecodierung weist die Teilbandcodiereinrichtung (1, 2, 3, 4) eine Synthesefilterbank (2) und eine Analysefilterbank (3) auf, die sowohl für eine Teilbandcodierung als auch für eine Teilbandechokompensation vorgesehen sind.

Vorteilhafte Anwendungsgebiete für den Echokompensator sind Teilnehmerendgeräte, z.B. Freisprecheinrichtungen für Autotelefone, Bildtelefone oder Videokonferenzeinerichtungen mit einem durch mindestens ein Mikrofon und mindestens einen Lautsprecher gebildeten Echopfad.

FIG.1

Die Erfindung betrifft ein Übertragungssystem mit einem Echokompensator mit einem zwischen eine Empfangs- und eine Sendestrecke einschaltbaren Kompensator.

Die Erfindung betrifft weiter einen Echokompensator und ein Teilnehmerendgerät mit einem durch mindestens ein Mikrofon und mindestens einen Lautsprecher gebildeten Echopfad und mit einem derartigen Echokompensator sowie ein Übertragungssystem zur Übertragung von Signalen zwischen mindestens zwei Sende-/Empfangsstationen mit mindestens einer Teilbandcodiereinrichtung und mit mindestens einem derartigen Echokompensator.

Derartige im folgenden vereinfachend auch als Echokompensatoren bezeichnete Teilbandechokompensatoren werden insbesondere zur elektrischen Echokompensation von Sprachsignalen für Telefonverbindungen über Satellitenstrecken, sowie zur akustischen Echokompensation bei Teilnehmerendgeräten, beispielsweise bei Freisprecheinrichtungen von Videokonferenzeinrichtungen benötigt. Bei letztgenannten kommt es auf Grund einer aufwendigen Bildcodierung zu einer zusätzlichen Verzögerung des Sprachsignals.

Aus "Advances in Speech Signal Processing", Sadaoki Furui, H. Mohan Sondhi, Seiten 327 bis 356 ist ein Echokompensator mit einem zwischen eine Empfangs- und eine Sendestrecke einschaltbaren Kompensator bekannt. Dabei werden die Eingangs- und die Ausgangssignale eines Echopfads durch identische Analysefilterbänke geschickt, die Vektoren von N Teilbandsignalen erzeugen, die mit einer reduzierten Abtastrate abgetastet werden. Der Kompensator bildet einen Vektor von Teilbandsignalen, die den Teilbandechosignalen entsprechen. Die hieraus resultierenden Teilbandfehler am Ausgang einer Subtraktionseinrichtung werden durch eine Synthesefilterbank geschickt, um ein Vollbandsignal zu liefern, das an den entfernten Sprecher zurückgesendet wird.

Der Erfindung liegt die Aufgabe zu Grunde, einen Teilbandechokompensator anzugeben, der vorteilhaft bei Teilbandcodierung bzw. Teilbanddecodierung einsetzbar ist.

Diese Aufgabe wird durch einen Teilbandechokompensator gelöst, der zur Kopplung mit einer Teilbandcodiereinrichtung vorgesehen ist, die mindestens eine Synthesefilterbank und mindestens eine Analysefilterbank aufweist, wobei die Synthesefilterbank und die Analysefilterbank sowohl für die Teilbandcodiereinrichtung als auch für den Teilbandechokompensator vorgesehen sind.

Die Erfindung geht dabei von der Erkenntnis aus, daß bei unabhängiger Realisierung von Teilbandcodierung und Teilbandechokompensation durch die Teilbandechokompensation eine zusätzliche Signalverzögerung eintritt. Diese wird durch die Erfindung dadurch vermieden, daß die Synthese-und Analysefilterbankfunktionen der Teilbandechokompensation in den Synthese- und Analysefilterbänken der Teilbandkodierung integriert sind. Der Echokompensator ist dabei als Teilbandechokompensator ausgebildet, wie dieser beispielsweise aus "Advances in Speech Signal Processing" von Sadaoki Furui und H. Mohan Sondhi bekannt ist. Der Echokompensator ist an eine Teilbandcodiereinrichtung anschließbar, die aus einem Teilbanddekodierer zur Dekodierung von von einem fernen Ende gelieferten Teilbandempfangssignalen sowie aus einer Teilbandcodiereinrichtung zur Codierung von von einem nahen Ende kommenden Teilbandsendesignalen besteht. Der Echokompensator besteht aus dem zwischen Sende- und Empfangsstrecke liegenden Kompensator; aus einem Subtrahierer sowie aus der in die Empfangsstrecke eingeschalteten Synthesefilterbank und der in die Sendestrecke eingeschalteten Analysefilterbank. Durch die in der Teilbandcodiereinrichtung erzeugten Teilbandsignale wird die Komplexität des Echokompensators reduziert. Die gesamte Verarbeitung der Teilbandempfangssignale erfolgt durch den Echokompensator, wobei die Synthesefilterbank und die Analysefilterbank sowohl für eine Teilbandcodierung als auch für eine Teilbandechokompensation vorgesehen sind. Hierzu weist der Kompensator eine Übertragungsfunktion auf, die sowohl zur Nachbildung des Echopfades als auch zur Synthese und Analyse der Teilbandcodierung vorgesehen ist. Durch die Integration der Teilbandechokompensation in die Teilbandkodiereinrichtung und die damit verbundene Einsparung von Analyse- und Synthesefilterbank entfällt der Rechenaufwand für diese Filterbänke, wodurch auch die Signallaufzeiten verringert sind. Der Echokompensator ist dabei unabhängig von jeweils verwendeten Codierverfahren der Teilbandcodiereinrichtung.

Bei einer direkten Struktur, die vor allem auf eine Reduzierung des Rechenaufwands abzielt, weist der Echokompensator eine einem Echopfad empfangsseitig vorgeschaltete Synthesefilterbank und eine dem Echopfad sendeseitig nachgeschaltete Analysefilterbank auf, wobei der Kompensator auch zur Modellierung der Synthese und der Analyse für die Teilbandcodierung vorgesehen ist.

Zur Ermittlung eines Echoschätzwertes ist bei der direkten Struktur der Kompensator an die Empfangsstrecke zwischen dem Teilbandcodierer und der Synthesefilterbank und über einen Subtrahierer an die Sendestrecke zwischen die Analysefilterbank und den Teilbandcodierer angeschlossen.

Mögliche Ansteuerungen für den Kompensator ergeben sich dadurch, daß ein erstes Ausgangssignal des Subtrahierers und/oder ein dekodiertes Signal am Ausgang des Dekodierers und/oder ein Sendesignal am Ausgang des Kodierers zur Ansteuerung des Kompensators vorgesehen sind.

2

Bei einer indirekten Struktur des Echokompensators, die insbesondere auf ein verbessertes Konvergenzverhalten abzielt, weist der Echokompensator eine dem Echopfad empfangsseitig vorgeschaltete erste Synthesefilterbank und eine dem Kompensator nachgeschaltete zweite Synthesefilterbank auf, wobei dem Teilbanddekodierer eine erste Analysefilterbank vorgeschaltet ist, die zur Verarbeitung eines aus dem Sendesignal des Echopfades und aus dem Ausgangssignal der zweiten Synthesefilterbank gebildeten Signals vorgesehen ist. Dabei wird der Schätzwert für den Echopfad im Gegensatz zur direkten Struktur nicht von Teilbandsignalen, sondern von Vollbandsignalen abgeleitet.

Eine Ansteuerung des Kompensators bei der indirekten Struktur des Echokompensators ergibt sich dadurch, daS der Echokompensator eine Identifikationseinrichtung aufweist, die aus einer zweiten Analysefilterbank zur Verarbeitung des Ausgangssignals der ersten Synthesefilterbank und einer dritten Analysefilterbank zur Verarbeitung des Ausgangssignals des Echopfades, einen Subtrahierer und einer Kompensationseinrichtung zur Ansteuerung des Kompensators gebildet wird.

Mögliche Realisierungsformen für den Echokompensator sind dadurch gegeben, daß der Echokompensator mittels eines digitalen Signalprozessors und/oder als digitaler Schaltkreis realisiert ist.

Vorteilhafte Anwendungsgebiete für den Echokompensator sind Teilnehmerendgeräte, z.B. Freisprecheinrichtungen für Autotelefone, Bildtelefone oder Videokonferenzeinrichtungen mit einem durch mindestens ein Mikrofon und mindestens einen Lautsprecher gebildeten Echopfad.

Der Echokompensator ist darüberhinaus bei Übertragungssystemen zur Übertragung von codierten Signalen zwischen mindestens zwei Sende-/Empfangsstationen mit mindestens einer Teilbandcodiereinrichtung einsetzbar. Dabei ist der Echokompensator unabhängig vom jeweiligen Codierverfahren.

Im folgenden wird die Erfindung anhand der in den Figuren dargestellten Ausführungsbeispiele näher erläutert.

Es zeigen:

Fig. 1 eine Teilbandcodiereinrichtung und einen Echokompensator in einer direkten Struktur,

Fig. 2 eine Teilbandcodiereinrichtung und einen Echokompensator in einer indirekten Struktur und

Fig. 3 ein digitales Übertragungssystem.

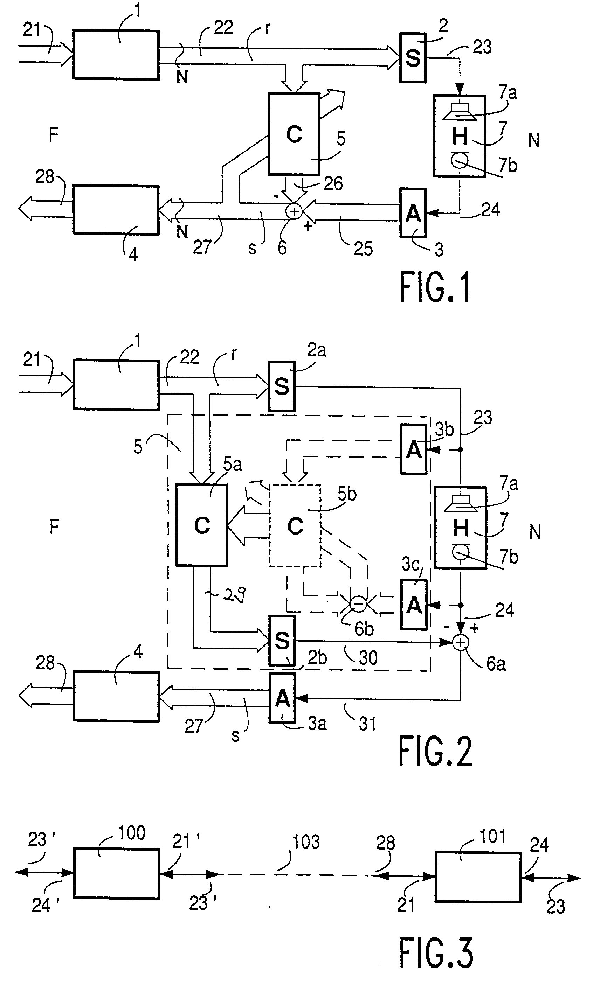

Die in Fig. 1 dargestellte Teilbandcodiereinrichtung 1, 2, 3, 4 besteht aus einem Teilbandcodierer 4 zur Codierung eines Sendesignals 27 und einem Teilbanddecodierer 1 zur Decodierung eines Empfangssignals 21 sowie aus einer Synthesefilterbank 2 und Analysefilterbank 3 eines Teilbandechokompensators 5, 6. Der Echokompensators 5, 6 weist weiter einen zwischen eine Empfangs- r und eine Sendestrecke s eingeschalteten Kompensator 5 sowie einen Subtrahierer 6 auf. Am Ausgang des Teilbanddecodierers 1 liegt ein decodiertes Empfangssignal 22, das der Synthesefilterbank 2 sowie dem Kompensator 5 zugeführt wird. Am Ausgang der Synthesefilterbank 2 liegt ein Sprachsignal 23 als Gesamtbandsignal vor, das über einen in Fig. 1 nicht dargestellten Digital-/Analog-Wandler, einem Lautsprecher 7a eines Echopfades 7 zugeführt wird. Auf der Empfangsstrecke r werden die von einem fernen Ende F übermittelten Signale digital bis zum nahen Ende N übertragen. Am nahen Ende N ist darüber hinaus ein Mikrofon 7b des Echopfades 7 angeordnet. Die vom Mikrofon 7b gelieferten Signale 24 werden über einen ebenfalls nicht dargestellten Analog-/Digital-Wandler der Analysefilterbank 3 zugeführt. Der in die Sendestrecke s eingeschaltete Subtrahierer 6 bildet aus dem Ausgangssignal 25 der Analysefilterbank 3 sowie einem vom Kompensator 5 gelieferten Ausgangssignals 26 ein Differenzsignal 27. Das Differenzsignal 27 steuert einerseits den Kompensator 5 an und wird andererseits dem Teilbandkodierer 4 zugeführt. Am Ausgang der Teilbandcodierers 4 liegt ein zu sendendes bzw. zu übertragendes codiertes Sendesignal 28.

Das dem Teilbanddecodierer 1 zugeführte Empfangssignal 21, das von fernen Ende F übermittelt wird, besteht aus H Teilbandsignalen und ist mit einer gegenüber der normalen Abtastrate um einen vorgebbaren Faktor R reduzierten Abtastrate dargestellt. Im Teilbanddecodierer 1 wird das Empfangssignal zunächst decodiert und dann als decodiertes Empfangssignal 22 an die Synthesefilterbank 2 weitergeleitet. Alle in Figur 1 eingezeichneten Signale werden durch ihre Z-Transformation repräsentiert; dabei sind die Teilbandsignale in Vektoren einer Länge N zusammengefaßt, die die Anzahl der Teilbänder angibt. Die Synthesefilterbank 2 setzt das decodierte Empfangssignal 22 in das als Vollbandsignal ausgebildete Sprachsignal 23 um. Das ebenfalls als Vollbandsignal ausgebildete Sprachsignal 24 des Echopfades 7 durchläuft die Analysefilterbank 3, wobei im Falle ohne Echokompensation die so erzeugten Teilbandsignale 25, 27 im Teilbandkodierer 4 in Sendesignal 28 umgesetzt werden. Mit Teilbandechokompensation werden die decodierten Teilbandsignale 22 als Eingangssignale für den Kompensator 5 verwendet. Der Kompensator 5 bildet einen Satz von Teilbandschätzwerten 26 für den Echopfad 7, wodurch die Teilbandfehler 27 minimiert werden. Dabei ist der Kompensator 5 von den zu codierenden Sendesignalen 27 steuerbar. Wie aus Fig. 1 ersichtlich wird, wird bei dem in Fig. 1 dargestellten Echokompensator keine zusätzliche Signallaufzeit durch die Echokompensation eingeführt, da lediglich eine Synthese- 2 bzw. Analysefilterbank 3 benötigt wird. Dies wird durch die Integration der Teilbandechokompensation in die Teilbandcodierung ermöglicht. Heben der für die Teilbandechokompensation ohnehin benötigten Synthese- 2 und Analysefilterbank werden keine weiteren Blöcke zur Analyse bzw. Synthese benötigt. Dabei ist zu berücksichtigen, daß der Kompensator 5 nicht nur den Echopfad 7 nachbilden muß, sondern auch die Synthese und Analyse der Teilbandkodierung. In Matrixschreibweise ergibt sich für den Kompensator somit folgende Übertragungsfunktion:

$$\underline{C}(z^R) = \underline{A}(z)\,\underline{H}(z)\,\underline{S}(z) \qquad (1)$$

wobei

$$\underline{A}(z) = \frac{1}{R}\begin{pmatrix} A_0(z) & \ldots & A_0(zv^{R-1}) \\ \cdot & & \cdot \\ \cdot & & \cdot \\ \cdot & & \cdot \\ A_{N-1}(z) & \ldots & A_{N-1}(zv^{R-1}) \end{pmatrix} \qquad (2)$$

$$\underline{H}(z) = \text{diag}\,(H(z)\ldots H(zv^p)\ldots H(zv^{R-1})) \qquad (3)$$

$$\underline{S}(z) = \begin{pmatrix} S_0(z) & \ldots & S_{N-1}(z) \\ \cdot & & \cdot \\ \cdot & & \cdot \\ \cdot & & \cdot \\ S_0(zv^{R-1})) & \ldots & S_{N-1}(zv^{R-1}) \end{pmatrix} \qquad (4)$$

$$v = e^{j2\Pi/R} \qquad (5)$$

und $\underline{A}(z)$ und $\underline{S}(z)$ die Übertragungsfunktionen der Synthese-2 und Analysefilterbank 3 definieren und durch die unterstrichenen Funktionen jeweils Teilbandsignale gekennzeichnet sind.

Bei dem in Fig. 2 dargestellten Echokompensator 5, 6a werden die bereits im Zusammenhang mit Fig. 1 eingeführten Bezugszeichen verwendet. Die Teilbandcodiereinrichtung 1, 2a, 3a, 4 besteht dabei wiederum aus einem Teilbandcodierer 4 zur Codierung eines Sendesignals 27 und einem Teilbanddecodierer 1 zur Decodierung eines Empfangssignals 21 sowie aus einer Synthesefilterbank 2a und Analysefilterbank 3a. Der Echokompensators 5, 6a weist weiter einen zwischen eine Empfangs- r und eine Sendestrecke s eingeschalteten Kompensator 5 sowie einen Subtrahierer 6a auf. Am Ausgang des Teilbanddecodierers 1 liegt ein decodiertes Empfangssignal 22, das der Synthesefilterbank 2 sowie dem Kompensator 5 zugeführt wird. Am Ausgang der Synthesefilterbank 2a liegt ein Sprachsignal 23 als Gesamtbandsignal vor, das nach Digital-/Analog-Wandlung (in Fig. 2 nicht dargestellt) einem Lautsprecher 7a eines Echopfades 7 zugeführt wird. Am nahen Ende N ist darüber hinaus ein Mikrofon 7b angeordnet, wobei vom Mikrofon 7b gelieferte Sprachsignale 24 nach Analog-/Digital-Wandlung einem Subtrahierer 6a zugeführt werden. Ein vom Subtrahierer 6a geliefertes Gesamtband- bzw. Vollbandsignal 31 wird einer ersten Analysefilterbank 3a zugeführt, an deren Ausgang in der Sendestrecke s ein zu kodierendes Sendesignal 27 anliegt. Das zu kodierende Sendesignal 27 wird der Teilbandkodiereinrichtung 4 zugeführt, an deren Ausgang ein zu sendendes kodiertes Sendesignal 28 anliegt. Der Kompensator 5 besteht aus einer ersten Kompensationseinrichtung 5a, an deren Ausgang ein Echofehlersignal 29 anliegt; dieses wird über eine zweite Synthesefilterbank 2b in ein Vollbandfehlersignal 30 umgesetzt. Dieses Fehlervollbandsignal 30 wird von dem vom Mikrofon 7b gelieferten Sprachsignal 24 subtrahiert. Der in Fig. 2 dargestellte Echokompensator 2a, 3a, 5, 6a weist weiter eine Identifizierungseinrichtung 3b, 3c, 5b, 6b auf, die aus einer zweiten Analysefilterbank 3b zur Verarbeitung des Ausgangssignals 23 der ersten Synthesefilterbank 2a und einer dritten Analysefilterbank 3c zur Verarbeitung des Ausgangssignals 24 des Mikrofons 7b, einem Subtrahierer 6b und einer zweiten Kompensationseinrichtung 5b zur Ansteuerung der ersten Kompensationseinrichtung 5a gebildet wird.

Der in Fig. 2 dargestellte Echokompensator 5, 6a weist im Gegensatz zu dem in Fig. 1 dargestellten Echkompensator eine "indirekte" Struktur auf, wobei der Hauptunterschied zwischen beiden Echokompensatoren darin besteht, daß bei dem in Fig. 2 dargestellten Ausführungsbeispiel das Fehlersignal nicht als Teilbandsignal, sondern als Vollbandsignal erzeugt wird. Hierdurch wird die zweite zusätzliche Synthesefilterbank 2b für die Echoschätzwerte 30 benötigt, jedoch entfällt der Aufwand für die Nachbildung der Analyse und Synthese durch die erste Kompensationeinrichtung 5a.

Fig. 3 zeigt ein Übertragungssystem, welches beispielsweise zur Übertragung von Videosignalen für Videokonferenzverbindungen geeignet ist. Das Übertragungssystem weist eine erste Sende-/Empfangseinrichtung 100 an einem ersten Ende und eine zweite Sende-/Empfangseinrichtung 101 an einem zweiten Ende des Übertragungssystems auf. Die Sende-/Empfangseinrichtungen 100, 101 sind über einen Übertragungskanal 103, der beispielsweise aus einer Satellitenübertragungsstrecke gebildet wird, miteinander verbunden. Die Sende-Empfangseinrichtungen 100, 101 weisen unter anderem einen Echokompensator auf, wie dieser in den Fig. 1 und 2 dargestellt ist. Die erste Sende-/Empfangseinrichtung 100 empfängt ein Empfangssignal 21', das auf einem Sendesignal 28 der zweiten Sende-/Empfangseinheit 101 basiert. Die zweite Sende-/Empfangseinheit empfängt ein Empfangssignal 21, das aus einem Sendesignal 28' der ersten Empfangseinheit hervorgeht. Die Echokompensatoren der Sende-/Empfangseinheiten 100, 101 liefern Sprachsignale 23, 23' und verarbeiten umgekehrt Sprachsignale 24, 24' eines in Fig. 3 nicht weiter dargestellten Echopfades.

Weitere Angaben insbesondere zur Teilbandechokompensation können folgenden Veröffentlichungen entnommen werden:

W. Kellermann, Analysis and design of multirate systems for cancellation of acoustica echoes. In Proc. ICASSP 88, pp. 2570-2573, New York, NY, USA, April 1988.

A. Gilloire and M. Vetterli, Adaptive filtering in subbands, In Proc. ICASSP 88, pp. 1572-1576, New York, NY, USA, Aril 1988.

M.M. Sondhi and W. Kellermann, Echo cancellation for speech signals, In S. Furui and M.M. Sondhi, eds., Advances in Speech Signal Processing, Marcel Dekker, Inc., 1991.

D. Slock, Fractionally-spaced subband and multiresolution adaptive filters, In Proc. ICASSP 91, pp. 3693-3696, Toronto, Canada, May 1991.

## Patentansprüche

1. Übertragungssystem zur Übertragung von Signalen (21, 28, 21', 28') zwischen mindestens zwei Sende-/Empfangsstationen (100, 101) mit mindestens einer Teilbandcodiereinrichtung (1, 2, 3, 4; 1, 2a, 3a, 4) und mit mindestens einem Teilbandechokompensator (5, 6 ; 5, 6a), wobei der Teilbandechokompensator (5, 6; 2a, 5, 6a) zur Kopplung mit einer Teilbandcodiereinrichtung (1, 2, 3, 4; 1, 2, 3a, 4a) vorgesehen ist, die mindestens eine Synthesefilterbank (2, 2a) und mindestens eine Analysefilterbank (3, 3a) aufweist, und wobei die Synthesefilterbank (2; 2a) und die Analysefilterbank (3; 3a) sowohl für die Teilbandcodiereinrichtung (1, 2a, 3a, 4; 1, 2a, 3a, 4) als auch für den Teilbandechokompensator (5, 6; 5, 6a) vorgesehen sind.

2. Übertragungssystem nach Anspruch 1,
   dadurch gekennzeichnet,
   daß die Teilbandcodiereinrichtung (1, 4) einen Teilbandcodierer (4) zur Codierung eines Sendesignals (27) und einen Teilbanddecodierer (1) zur Decodierung eines Empfangssignals (21) aufweist.

3. Übertragungssystem nach einem der Ansprüche 1 oder 2,
   dadurch gekennzeichnet,
   daß die Synthesefilterbank (2, 2a) einem Echopfad (7) empfangsseitig vorgeschaltet und daß die Analysefilterbank (3, 3b) dem Echopfad (7) sendeseitig nachgeschaltet ist, wobei der Kompensator (5) auch zur Modellierung der Synthese und der Analyse für die Teilbandcodierung vorgesehen ist.

4. Übertragungssystem nach einem der Ansprüche 1 bis 3,
   dadurch gekennzeichnet,
   daß der Kompensator (5) an die Empfangsstrecke zwischen dem Teilbanddecodierer (1) und der Synthesefilterbank (2) und über einen Subtrahierer (6) an die Sendestrecke (s) zwischen die Analysefilterbank (3) und den Teilbandcodierer (4) angeschlossen ist.

**5.** Übertragungssystem nach einem der Ansprüche 1 bis 4,
dadurch gekennzeichnet,
daß ein erstes Ausgangssignal (27) des Subtrahierers (6) und/oder ein dekodiertes Signal (22) am Ausgang des Teilbanddecodierers (1) und/oder ein Sendesignal (28) am Ausgang des Teilbandcodierers (4) zur Ansteuerung des Kompensators (5) vorgesehen sind.

**6.** Übertragungssystem nach einem der Ansprüche 1 oder 2,
dadurch gekennzeichnet,
daß der Teilbandechokompensator (5, 6a) eine dem Echopfad (7) empfangsseitig vorgeschaltete erste Synthesefilterbank (2a) und eine einer ersten Kompensationseinrichtung (5a) des Kompensators (5) nachgeschaltete zweite Synthesefilterbank (2b) aufweist und daß einem ersten Subtrahierer (6a) des Kompensators (5) eine erste Analysefilterbank (3a) vorgeschaltet ist, die zur Verarbeitung eines aus dem Sendesignal (24) des Echopfades (7) und aus dem Ausgangssignal (30) der zweiten Synthesefilterbank (2b) gebildeten Signals (31) vorgesehen ist.

**7.** Übertragungssystem nach einem der Ansprüche 1, 2 oder 6,
dadurch gekennzeichnet,
daß der Teilbandechokompensator (5, 6a) eine Identifizierungseinrichtung (3b, 3c, 5b, 6b) aufweist, die aus einer zweiten Analysefilterbank (3b) zur Verarbeitung des Ausgangssignals (23) der ersten Synthesefilterbank (2a), einer dritten Analysefilterbank (3c) zur Verarbeitung des Ausgangssignals (24) des Echopfades (7), einem zweiten Subtrahierer (6b) und einer zweiten Kompensationseinrichtung (5b) zur Ansteuerung der ersten Kompensationseinrichtung (5) gebildet wird.

**8.** Übertragungssystem nach einem der Ansprüche 1 bis 7,
dadurch gekennzeichnet,
daß der Teilbandechokompensator (5, 6; 5, 6a) mittels eines digitalen Signalprozessors und/oder als digitaler Schaltkreis realisiert ist.

**9.** Teilnehmerendgerät mit einem durch mindestens ein Mikrofon (7b) und mindestens einen Lautsprecher (7a) gebildeten Echopfades (7) und mit mindestens einer Teilbandcodiereinrichtung (1, 2, 3, 4; 1, 2a, 3a, 4) und mit mindestens einem Teilbandechokompensator (5, 6; 5, 6a), wobei der Teilbandechokompensator (5, 6; 2a, 5, 6a) zur Kopplung mit einer Teilbandcodierung (1, 2, 3, 4; 1, 2, 3a, 4a) vorgesehen ist, die mindestens eine Synthesefilterbank (2, 2a) und mindestens eine Analysefilterbank (3, 3a) aufweist und wobei die Synthesefilterbank (2; 2a) und die Analysefilterbank (3; 3a) sowohl für die Teilbandcodiereinrichtung (1, 2a, 3a, 4; 1, 2a, 3a, 4) als auch für den Teilbandechokompensator (5, 6; 5, 6a) vorgesehen sind.

**10.** Teilbandkompensator (5, 6; 5, 6a) mit einem zwischen eine Empfangs- (r) und eine Sendestrecke (s) einschaltbaren Kompensator (5), wobei der Teilbandechokompensator (5, 6; 2a, 5, 6a) zur Kopplung mit einer Teilbandcodiereinrichtung (1, 2, 3, 4; 1, 2, 3a, 4a) vorgesehen ist, die mindestens eine Synthesefilterbank (2, 2a) und mindestens eine Analysefilterbank (3, 3a) aufweist, die Synthesefilterbank (2; 2a) und die Analysefilterbank (3; 3a) sowohl für die Teilbandcodiereinrichtung (1, 2a, 3a, 4; 1, 2a, 3a, 4) als auch für den Teilbandechokompensator (5, 6; 5, 6a) vorgesehen sind.

FIG.1

FIG.2

FIG.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| A | EP-A-0 412 691 (AMERICAN TELEPHONE & TELEGRAPH COMPANY) * Seite 2, Zeile 48 - Seite 3, Zeile 18; Abbildung 1 * --- | 1,3-5, 8-10 | H04B3/21 |
| A | EP-A-0 400 755 (N.V. PHILIPS GLOEILAMPENFABRIEKEN) * Zusammenfassung * ----- | 1,2,9,10 | |

| | | | RECHERCHIERTE SACHGEBIETE (Int.Cl.5) |
|---|---|---|---|
| | | | H04B H04M |

Der vorliegende Recherchenbericht wurde für alle Patentansprüche erstellt

| Recherchenort | Abschlußdatum der Recherche | Prüfer |
|---|---|---|
| DEN HAAG | 13. Dezember 1993 | Bossen, M |